# EUROPEAN PATENT SPECIFICATION

(11) **EP 3 729 795 B1**
(45) Date of publication and mention of the grant of the patent: **20.03.2024**
(21) Application number: 18839678.2
(22) Date of filing: 21.12.2018
(51) Int. Cl.: H04M 3/42

(54) **ACTIVATING A VOICE FUNCTION FOR A CALL NOT ANSWERED**
AKTIVIEREN EINER SPRACHFUNKTION FÜR EINEN NICHT ANGENOMMENEN ANRUF
ACTIVATION D'UNE FONCTION VOCALE POUR UN APPEL NON RÉPONDU

(30) Priority: 21.12.2017 FI 20176145
(43) Date of publication of application: 28.10.2020
(73) Proprietor: NSF Telecom AB, 02160 Espoo (FI)
(72) Inventor: KAINULAINEN, Maria, 02760 Espoo (FI); VALTONEN, Miia, 00330 Helsinki (FI); TATRAI, Janos, 02210 Espoo (FI); HARJUMÄKI, Joonas, 00440 Helsinki (FI); PUUSTINEN, Henrik, 02130 Espoo (FI); TIURI, Markku, 02230 Espoo (FI); AHOLA, Kalevi, 02400 Kirkkonummi (FI); HENTILÄ, Marko, 02400 Kirkkonummi (FI)
(74) Representative: Boco IP Oy Ab
(86) International application number: PCT/FI2018/050960
(87) International publication number: WO 2019/122530

(56) References cited:
- Etsi: "TS 123 205 V14.0.0, Bearer-independent circuit-switched core network; Stage 2", , 21 March 2017 (2017-03-21), XP055572171, Retrieved from the Internet: URL:https://www.etsi.org/deliver/etsi_ts/1 23200_123299/123205/14.00.00_60/ts_123205v 140000p.pdf [retrieved on 2019-03-20] & Etsi: "TS 122 085, V14.0.0, Closed User Group (CUG) supplementary services; Stage 1", , 24 March 2017 (2017-03-24), XP055572369, Retrieved from the Internet: URL:https://www.etsi.org/deliver/etsi_ts/1 22000_122099/122085/14.00.00_60/ts_122085v 140000p.pdf [retrieved on 2019-03-24] & Etsi: "TS 122 004, V14.0.0, General on supplementary services", , 24 March 2017 (2017-03-24), XP055572490, Retrieved from the Internet: URL:http://www.etsi.org/deliver/etsi_ts/12 2000_122099/122004/14.00.00_60/ts_122004v1 40000p.pdf [retrieved on 2019-03-21]

## Description

### TECHNICAL FIELD

The invention is concerned with a telephony service especially meant for seniors as a service for safety care.

### BACKGROUND

A growing number of people have elderly parents or family members with physical restrictions living alone. For these people it is important to be notified when their family members are in need or they are in an emergency situation.

Most studies of older people's involvement with technology focus on the internet. Many websites, however, are so poorly designed that they are not fully accessible to many of the older users.

Despite barriers, such as lack of user-friendliness of equipment and unfamiliarity/resistance to change, many older people already benefit from new technologies.

The main functions used are those enabling them to keep in touch regularly and relatively cheaply with family and friends. The use of technology for enabling social contact and participation can be very successful, but many older people need help at the start and some need ongoing support or reassurance.

Technology can also be successfully used for monitoring older people remotely, but this works best with the active participation of those people. Older people's involvement with telecare and remote health monitoring are best achieved when the technology is simple and designed for the beneficiary to understand and to use. The focus for the use of technology to facilitate older people to live independently in their own homes for longer has been on additional, assistive technology and telecare/telehealth.

Smartphones offer more than traditional mobile phones, but thy can be overly complicated and many of their features can be more hindrance than help if all you want from a phone is the ability to make calls and send text messages. Because of the massive amounts of functionality smartphones offer over feature phones, they can seem complicated to use. A smartphone with a simple and easy to use interface is therefore a necessity.

Alongside the internet and mobile devices, health and mobility technology for older people has also improved dramatically over the past decade. Personal alarm systems is an example of such technology. Having an alarm means that people can continue living in the comfort of their own home - rather than moving into a care home or staying in a hospital bed that is in demand.

A personal alarm is one solution for people who live alone. For people in this situation, there is always a worry about what will happen should they have some sort of accident in the home. Even if they live with others, it can be difficult to get the help needed in an emergency situation.

A pendant alarm gives older people a lifeline for such situations. If an incident takes place, such as a fall, he or she can press one button for help. Without a personal alarm there is a chance that they could be lying on the floor for hours, or even days, before somebody comes to visit.

There is, however, a need for more than that. Easy to use mobile phones have therefore been for making it really simple to answer and end calls. There exist phones, with which users can send and receive text messages with just one click, thanks to e.g. a direct Short message service (SMS) key or a button for an SOS call to predefined numbers in the phone.

An emergency contact feature can be set up to send GPS location details via text should the user be out and about when something happens. It is also possible to set the phone up so that numbers saved as SOS contacts will always get through even when the phone is switched off. As long as it has some battery life, the phone will wake and start ringing.

The connectivity lends itself to lots of other fancy features, like being able to set up health monitoring and reminders for the user but being able to use it as a simple phone has been overlooked. Examples of such features are call blocking functions and blacklist functions letting users block certain numbers at the touch of a button. But the whitelist function is potentially more useful: it can be programmed to allow calls only from numbers programmed into the phone. Emergency settings can work through a list of programmed contacts at one touch.

Applications with aid functions have initiated older people to perform a more versatile use of mobile phones and it is because of such phone functions.

ETSI publications TS 123 205, TS 122 085 and TS 122 004 form prior art disclosures of call completion services.

US patent application 2004/0086092A1 provides a system and method of enhanced speaker activation by an alarm signal that will activate a telephone communication or connection to a designated friend, service or care giver.

US patent 7,340,240 includes a mobile telephone having a function that detects key input operations and has the mobile telephone to transmit an emergency notification to a predetermined address stored when a timer notifies that a preset period has elapsed since a key input operation was last detected.

US patent 9,338,628 provides an emergency notification system that provides simultaneous notifications to at least two entities, the notification including a medical profile for a registered user of the system.

### SUMMARY

The object of the invention is defined by the subject-matter of independent claim 1.

The preferable embodiments have the characteristics of the sub claims and are presented below.

The alternative interactive function can be activated automatically or by user action and is an alternative to a normal call to be connected.

In this text "an outgoing call" and "an incoming call" is meant from the view of the telephony service such that an outgoing call is from the telephony service and an incoming call is to the telephony service

The alternative interactive function can be activated by the telephony service at an intended call e.g. (immediately) after an on-line checking by the telephony service whether the incoming call comes from an allowable number for allowance or blocking of a calling party. The intended call can be a scheduled call from the telephony service or a call out of the blue by machine-learning from the telephony service.

### The telephony service

The telephony service is a cloud service in the Internet and is provided by a telephony service provider, which is a software interface to a user device, such as a physical telephony device, that can be accessed programmatically to perform actions such as dialing a phone number or logging a call.

The telephony service can perform auto-provisioning and remote administration of phone and other user device clients, for example with respect all configuration parameters, such as special ringtones, personal directories, and softkeys (enabling a direct access to family members, caregivers and the like.

The telephony service is in the first hand intended to work on as is built on landline (=wireline) telephony but can equally well be used by user devices connected to mobile telephone networks.

The telephony service can include Artifical Intelligence (Al) and be self-learning and e.g. add telephone numbers to white lists when it e.g. identifies an acceptable telephone number and by making use of user profiles. It can also learn undesired callers and "spam callers" and to include those in black lists and record the calls.

### The user device

The telephony service works towards user devices, which enable the processing of voice communication via the internet protocol, i.e. Internet Protocol (IP) phones having a Voice over Internet Protocol (VoIP) client therefore. The VoIP client can e.g. work through Wi-Fi access. Wi-Fi compatible devices can connect to the Internet via a Wireless Local Area Network (WLAN) and a wireless access point or other Internet connection. The user device can be a narrow/broadband device or phone, such as a landline phone, a tracker phone, a cellphone (2G), a smartphone (3G/4G/LTE), a wifi-phone, an ATA (analog telephone adapter + old analogue landline phone), and/or an loT device (for e.g. help-request, gps/gsm positioning, or initiating a call out of the blue between the user device and some pre-defined party, such as a caregiver).

As voice functions with a loudspeaker is an important part of the invention, fixed telephones are usually more advantageous to use in the invention the sense that for the time being the audio quality is better than in mobile phones and the user can even hear the loudspeaker from another room. Thus, the user device can e.g. be a fixed telephone (either an old analog one or a new IP phone), a mobile telephone, an Ipad, or other suitable device.

The user can also make us of the telephony service with one, two or a multiple of devices that are connected to the telephony service and one of them can be an analogue telephone if it is connected to the IP phone via an Analog Telephone Adapter (ATA) adapter. Thus, there can be many user devices.

An analog telephone adapter (ATA) is a device, with which traditional analog telephones can be connected to a digital telephone system or a voice over IP telephony network. The user can have either one of a mobile phone or a fixed telephone or both (and/or other suitable devices), in which in the last case they can work independently or together. The user device preferably has a loudspeaker/microphone to enable all possible functions and be able to understand the protocols used in some functions.

The user can also have a phone with two numbers, such as a mobile phone with two Subscriber Identity Module (SIM) cards or the user can have a device with a wireless VoIP client or landline IP phone with multiple Session Initiation Protocol (SIP) accounts.

This invention primarily utilizes an internet connection by e.g. an ADSL/fiber modem or a mobile broadband router. If the normal connection is temporarily out-of-order, another connection, such as mobile broadband, (e.g. a 3G/LTE/Wifi router) can be used for communication. A secured VoIP connection requires less than 100 kbps (=narrow band) and relatively low latency. The G.114 recommendation regarding mouth-to-ear latency indicates that most users are "very satisfied" as long as the latency does not exceed 200 ms). G.114 is an ITU recommendation that addresses acceptable delays for voice applications, is oriented to national telecommunications and is more stringent than what is normally applied in private voice networks.

### Pre-defined other parties

The pre-defined other parties can be user telephones or other third-party devices that also communicate over the Internet with the user device and with the telephony service. The third-party devices might be fixed or mobile and they can be e.g. VoIP devices, GSM phones or phones communicating over wired networks and Internet of Things (IoT) devices connected via GSM or Low Power Radio networks. The calls from and to fixed telephones of third parties can takes place over the Public Switched Telephone Network (PSTN), whereas mobiles phones of third parties can use the GSM (Global System for Mobile Communications. The users can be human or machines, and the machine can work with self-learning intelligence.

### Management of the telephony service

The telephony service can be managed by one or more pre-defined parties or authorized persons with rights to administer the telephony service via a function call, an IVR function, via the Web by web administration or via an APP (= a software client) in the device of the one or more pre-defined party.

The different alternative functions of the telephony service are administered by means of a connected database, which defines the situations for activating a given alternative function, defines a list of pre-defined parties to be involved in a given alternative function, such as a notification, a conference call, a forwarding function or a call transfer. It also defines a white list of pre-defined parties causing a call with a special ring signal to the user device that can be connected. Furthermore, it defines a black list of pre-defined numbers to be blocked in an attempted incoming call to the user device. Still further, it defines a list of pre-defined numbers blocked for outgoing calls. The database also stores device and alternative function configurations, historical and administration events of the telephony service.

The database has thus different numbers or different lists of numbers to activate different functions. Different lists include said black lists, white lists, lists of numbers of pre-defined parties for activation of different functions, lists of special care givers and/or family members, and e.g. lists of destinations of e.g. the emergency function.

The special ring signal can be a dynamic announcement e.g. informing who is calling before the call is set up (to the called party, i.e. the B-party) by the telephony service. The name of the caller (usually a friend or family member or care giver) is Text-To-Speech (TTS) generated and stored in the user device by auto-provisioning or remote management. A special ring signal can also be used in connection with the forwarding function in the first incoming call leg.

The telephony service manages several user devices and might have personally provisioned interactive functions to be activated depending on or from which user device (or software client) the outgoing and incoming calls take place with.

The telephony service can match pre-defined parties to the actual user device (the right family members etc to a certain senior).

The telephony not only has interactive functions to guarantee a secure access to pre-defined parties and user devices but also ensure secure accessibility in case of failure of its own network (provided by one or more parties such as an Internet Service Provider (ISP), an Internet Telephony Service Provider (ITSP), a Content Service Provider (CSP), a Mobile Virtual Network Provider (MVNO), or a Telecom Network Operator).

The telephony service can co-work through two networks, such as two clouds. In case of failure in the primary network in situations, wherein an incoming call does not reach the service a general access number to the network service can be used.

Incoming calls to the general access number are forwarded to the right called party if the service network can recognize a one-to-one relation of the number calling (user device or pre-defined party) and/or the called number (user device or pre-defined party). *Interactive Voice Response* (IVR) / Automatic Speech Recognition (ASR) assistance may be requested for authentication / authorization purposes to figure out where a call should be routed.

Also outgoing calls to the telephony service can be directed through another line or another user device. The user can choose another line and make use of all the services provided by the telephony service or potentially another instance deployed to another cloud.

A control program for service and network monitoring can detect faults and automatically alarm and fix problems if possible. There can also be an automatic restart of the telephony service after an interruption or a major failure event. An end-to-end alternative communication line between user and a pre-defined party is also a possibility to ensure high availability of the service.

### Activation of the alternative functions

Said alternative function is activated by the telephony service in situations when the user device is off-hook, the user lifts the handset of the user device from on-hook to off-hook, the called party does not answer, the called party is busy in another call, the called party is off-line or unavailable or not connected to the telecommunication network, the called party actively disconnects the call before answering, or the called party activates the alternative interactive function by means of a short-dial code, by dialling a service number, by a physical move of the user device, or the alternative function is activated by a timer function, or a sensor. The alternative function can also be initiated by the telephony service, e.g. as a result of machine learning, such as in the form of a message or call out of the blue or as a result of learnt user behaviour upon changes.

Machine learning might include adding a telephone number to a black list or white list (such as at calls-out-of- the- blue, notifications as a result of sensor data and geographical coordinates or changed user behaviour.

Notifications might include invitations to friends of friends to join friend groups that belong to certain pre-defined parties.

The alternative interactive functions that are activated or selected to be activated can be depend on the number of the caller, i.e. depending on who is calling.

The alternative interactive function can be activated by the user or automatically or by an assisted user action, the assisting being performed e.g. by an IVR menu, a robot, or by a notification or by an information message or as a result of a machine-learnt Artificial Intelligence (Al) activated action or function.

The alternative interactive function can be a combination of alternative interactive function even during the same call.

The activation makes use of e.g. multiphase call setup and multiple channels to optimize connectivity and message delivery according to individual preferences of the users of the telephony service.

### List of alternative functions

Said alternative function is a call completion function involving a voice function such as a loudspeaker function, an override function, a forwarding function, a call transfer function, an automatic redial, a notification function, a hot-line function, an emergency function, a blocking function, a blind/attended transfer function, an Artificial Intelligence (Al) function, and/or a voice/video recording function. Thus, the voice function according to the invention covers many features in addition to a traditional voice mail that allows users and subscribers to exchange personal voice messages.

The Artificial Intelligence (Al) function can include machine learning of e.g. user behaviour, learn to identify undesired callers and automatically include them in the list of numbers to be blocked. Furthermore, a call, such as a or call out of the blue, can be initiated by decision of a machine-learning-program based service logic in the telephony service. For example, if the user of the user device has a notable deviation in daily routines, e.g. has not touched his/her landline phone for a while.

The alternative functions can include automatic/Scheduled/on-demand conference calls, audios streaming, dynamic/static Text-To-Speech functions, voicemail recording and delivery.

### Detailed description of the alternative functions of the invention

In the following, the alternative functions are described more in detail.

### Voice function

One such interactive function is a pre-recorded voice assisting function, which is started when the user of the device lifts up the hook of the phone or makes a simple physical move, such as shaking, of the phone.

The voice function can be dynamically generated via a Text-To-Speech (TTS) in an autoprovision process. By autoprovision, also called automated provisioning or self-service provisioning, the telephony service is used by using said automated alternative functions carried out electronically without requiring human intervention.

Such a voice function can consist of pre-recorded or dynamically generated audio that further direct the user of the device by means of a menu of short-dial codes. The voice function is performed by Interactive Voice Response (IVR) technology.

In some embodiments, such a voice function can be followed by the use of an automatic voice recognition/a Speech-To-Text (STT)/voice recognition so that the user of the device can by speaking indicate where to call instead of pressing on a short-dial code or telephone number or the name of the called party (e.g. when problems with seeing) and the speech recognition can start the call.

In a call to the user device, when the user hears from a Text-To-Speech (TTS) robot who the caller is, the user can for shortening the waiting indicate with some physical move, such as pressing on any number, that he/she wants to receive the call. Or the user can just wait for the call to be connected. If the call is not received, the caller can be directed to the user's voice mail and a notification about an unknown caller is sent to the one or more pre-defined parties. Alternatively, the unknown caller can be connected to a pre-defined party that may transfer the call further to the original B-party. This function is e.g. useful in cases, wherein an old friend has a new number.

One voice function calls out the caller instead of a ring signal. The caller can be called out by number or name if the caller is found in the database that is connected to the telephony service or in an external database.

The telephony service of the invention also has an assisted voice function, wherein the user can hear who is calling when lifting up the hook or when answering and bringing the user device off-hook. The voice telling the caller either by name or reading the number can be performed by an IVR or TTS robot. This voice function works e.g. in user devices being analog telephones connected via an ATA or IP-telephones. The call can be accepted by pressing on a digit or just by waiting a few seconds. If the user in this situation does not accept the call (simply by hanging up), it can be routed to a voice mail and a message or notification be sent to one or more pre-defined parties, which usually are caregivers, informing that a call attempt from an unknown number has taken place.

**Interactive voice response (IVR)** is a technology that allows a computer to interact with humans through the use of voice and Dual Tone Multi Frequency (DTMF) tones input via a keypad. DTMF decoding and speech recognition are used to interpret the caller's response to voice prompts. DTMF tones are entered via the telephone keypad. Dual-tone multi-frequency signaling (DTMF) is an in-band telecommunication signaling system using the voice-frequency band over telephone lines between telephone equipment and other communications devices and switching centers. In an auto-answer mode, harmonic DTMF tones may be played by the user device before connecting a voice path, i.e. this mode, the called party si informed that an auto-answer voice connection is about to be established.

### Notification function

The menu preferably includes a code to a notification function, which sends a notification to at least one pre-defined party, as well as includes codes for individually calling selected pre-defined parties. These pre-defined parties can e.g. constitute a so called white list of telephone numbers. The user can in one embodiment select one of the codes, but if no selection is made after a defined time-period to the user device, the notification function is activated to the at least one pre-defined party.

The one or more pre-defined parties can form a call ring or a rotating call ring, wherein one after another is contacted until someone in the ring answers. Time scheduled notifications and other notifications can go to the one or more pre-defined parties to guarantee that contact with the user, such as a senior, is kept by at least someone on a regular basis.

The **notification function** is actuated in the form of an automatic call or message as initiated by the telephony service when the user of the user device has not answered to a call from at least one of the pre-defined parties for a set time.

The notification function can also be actuated in the form of an automatic call as initiated by the telephony service when the user of the user device has not called at least one of the pre-defined parties for a set time.

Automated notifications can also be a result of indicating call requests. Next time when the user brings the device out off hook, there is a voice message instructing the user to wait for a call to be forwarded to someone that tried to call earlier.

### Short-dial codes

The menu of short-dial codes in the user device includes further codes to one or more family members, caregivers, friends, radio channels, multimedia services, weather forecast services, culture services, and news. The short-dial codes can be handled as help requests or emergency functions.

One short-dial code could be a function that routes the call via a reserve network of the telephony service in case the call does through the primary network does not work. Normally, however, a call is directly routed via the reserve network of the telephony service if the first one is out of function or the call does not go through of some reason.

A caregiver or carer can e.g. be an unpaid or paid member of a person's social network who helps them with activities of daily living. Caregiving is most commonly used to address impairments related to old age, disability, a disease, or a mental disorder.

Typical duties of a caregiver might include taking care of someone who has a chronic illness or disease; managing medications; or taking care of household chores, meals, or bills for someone who cannot do these things alone.

With an increasingly aging population in all developed societies, the role of caregiver has been increasingly recognized as an important one, both functionally and economically. Organizations which provide support for persons with disabilities have various forms of support for carers as well.

The services reached by the short dial codes can be auto-provisioned upon e.g. subscription or at any later stage by remote administration. One short dial code could be a little longer dial code, such as a service number in the form of a postal code to a local conversation group.

### Conference call

The notification, which can be a conference call invitation, can be activated by the user device or scheduled by the telephony service and be sent to one or more pre-defined parties as a telephone call, by Short Message Service (SMS), by e-mail, by Whatsapp or by other messaging means. Such an invitation contains information of a number to a conference call, which the pre-defined parties can call to attend the conference. The conference can be attended directly by accepting or answering the call, by calling to the number of the conference call informed or by additionally adding a code. If a conference call invitation is missed, the call goes back to a calling party number. The conference call can also be joined by simply dialling a digit to voice prompt, or by waiting for a few seconds where after the call is automatically connected to the conference bridge.

A practical way to organize the conference is to organize it behind a public telephone number, such as a public access number. The conference can then be joined by calling to the access number and identification information. There might be an IVR menu asking which group of pre-defined parties one wishes join. The suer device can join easily, such as by an easy short-dial code (e.g. "0"), which is a number to the same telephony service, which automatically identifies the user from the A number from the database. If no selection is made, the group of friends (certain pre-defined parties) chooses the right group, such as a local group selected by a short-dial code being a postal code if e.g. a local discussion group is desired to reach.

### Confirmation function

The notification function is preferably followed by a confirmation function for confirming for the pre-defined parties that the call has been handled (sent from the pre-defined party that handled the call).

The **notification and/or the confirmation** is sent e.g. as a telephone call, by Short Message Service, SMS, by e-mail, by Whatsapp or other messaging means.

### Forwarding function

The invention provides a new and inventive ways to perform a call forwarding by enabling relocation of an existing outgoing call from the telephony service call to a device to another device or even to the same device. Preferably, but not necessarily, only calls from a list of numbers, such as those in a white list, are forwarded by the (call) forwarding function.

The call **forwarding function can** relocate a first outgoing call leg attempt to the user device back as a second outgoing call leg attempt through the same physical line or same internet access but another user device/number (can also be another soft-client and/or another SIP account number and may reside on the same device) of the user than to that used for the first outgoing call leg if the user does not answer the first outgoing call leg attempt after a certain time period, whereby **the voice function,** such as an bidirectional voice function is activated/a voice channel established. This is especially useful at connection errors and disturbances in the telecommunications network.

The call **forwarding function** can also relocate the first outgoing call leg attempt to the user device back as a second outgoing call leg attempt through the same line and to the same number and user device of the user as that used for the first outgoing call leg attempt if the user does not answer the first outgoing call leg attempt after a certain time period, whereby the voice function is activated as above. This is especially useful if a first user device is out of function of some reason. This might e.g. easily happen if the user has a simple landline handset, which by mistake may reside off the hook.

Voice over IP is implemented in various ways using different protocols such as the Session Initiation Protocol (SIP), which is an application layer protocol. It defines the methodology of SIP communications and the specific format of messages exchanged in the sessions. SIP is a signalling protocol used to create, modify, and terminate a multimedia session over the Internet Protocol.

SIP is based on client-server architecture where the caller's phone acts as a client which initiates a call and the callee's phone acts as a server which responds the call. SIP is primarily used to set up and terminate voice or video calls. A header is a component of a SIP message that conveys information about the message. It is structured as a sequence of header fields.

Said forwarding is performed by making use of the header information in the Session Initiation Protocol (SIP). The outgoing call from the telephone service to the user device is set up by the service dividing it into two outgoing call parts, here called the first outgoing call leg attempt and the second outgoing call leg attempt. The outgoing call thus consists of two legs, wherein, the first outgoing call leg is set up by the telephony service using the normal header and the second outgoing call leg is set up by the telephony service using the (auto-answer) answer-after header in the Session Initiation Protocol (SIP).

Generally, a voice call over a packet network is segmented into discrete call legs. Each call leg is associated with a dial peer. A call leg is a logical connection between a router and an IP telephony device. *Call legs* can be considered to describe active pieces of a call. Dial peers identify call source and destination endpoints and define the characteristics that are applied to each call leg in a call connection.

The first outgoing call leg attempt is set up by the service using the standard headers in the SIP invite message of the Session Initiation Protocol, SIP, and the second outgoing call attempt is set up by the service using the Call-Info header field of the SIP for providing additional information, which additional information set the loudspeaker on to start a bidirectional voice function automatically if the user has not answered after a time defined (no matter of status of handset (on/off hook). The voice function can be a special harmonic ring tone or pre-recorded announcement or melody for the user device or it can be a pre-recorded/dynamic Text-To-Speech (TTS) announcement to be played by the telephony service in order to pay special attention for an incoming auto-answer call.

The Internet Engineering Task Force (IETF) documents specify e.g. call completion features for open standards, such as Session Initiation Protocol (SIP).

The **Session Initiation Protocol (SIP)** is a communications protocol for signaling and controlling multimedia communication sessions in applications of Internet telephony for voice and video calls, in private IP telephone systems, as well as in instant messaging over Internet Protocol (IP) networks. The protocol defines the methodology of SIP communications and the specific format of messages exchanged for cooperation of the participants in multimedia sessions.

Generally, the term header refers to supplemental data placed at the beginning of a block of data being transmitted in a message. The header fields are components of the header section of request and response messages and define the operating parameters.

In the Session Initiation Protocol (SIP) there are mandatory fields and optional header fields. A "mandatory" header field must be present in a request, and be understood by the receiver of the request and an "optional" header field means that an element may be included in the header field in a request or response, but can be ignored if present.

When a user agent client desires to initiate a session (for example, audio, video, or a game), it formulates an INVITE request. The INVITE request contains a number of header fields. Header fields are named attributes that provide additional information about a message. The ones present in an INVITE include a unique identifier for the call, the destination address, caller address, and information about the type of session that the caller wishes to establish. The first line of the text-encoded message contains the method name (INVITE). The lines that follow are a list of header fields.

The main fields included in a SIP INVITE message, which is sent to set-up a VoIP call. A SIP INVITE message contains typically between 4 and 6 header entries with contact information inside them. A valid SIP request at a minimum, contain these 4 - 6 header fields that are mandatory in all SIP requests and are the fundamental building blocks of a SIP message. The basic functions of SIP are the location of an end point, signal of a desire to communicate, negotiation of session parameters to establish the session, and teardown of the session once established.

After a new request has been created, and the mandatory header fields described above have been properly constructed, any additional optional header fields are added. The Call-Info header field is an optional "purpose" header field in the Session Initiation Protocol (SIP), which normally provides additional information about the caller or callee, depending on whether it is found in a request or response. The call info is defined in RFC3261. RFC is a Request for Comments (RFC) is a type of publication from the Internet Engineering Task Force (IETF) and the Internet Society (ISOC), the principal technical development and standards-setting bodies for the Internet.

The first line of the SIP INVITE message contains the method name (INVITE). The lines that follow are a list of header fields.

The invention makes use of an optional call-info header in a new and inventive way. In the second outgoing call leg, the call-info header in the SIP invite message can be:
Call-Info: <sip>;answer-after=5;device=speaker

When this functionality is used, the user device, which can be a landline IP phone or a wireless VoIP/SIP client, needs to support the auto-answer capability.

### Override function

The interactive voice call can in some embodiments be established with the user of the device by an override function if the user has not answered the second outgoing call leg in the forwarding function after a pre-set time period. The override function allows the caller to here environmental sounds around the user carrying the mobile phone in addition to starting a loudspeaker for talking to the user. In this IVR is used in the beginning of the call. The override function can also in one alternative start the notification function. The override function can be a priority function for e.g. caregivers. The override can end an ongoing call or put an ongoing call on hold and establish a new one between the user and a caregiver.

### Hot-line function

A hot-line function can be actuated by a physical move of the phone. The hot-line function is for example triggered when the user lifts the handset from on-hook to off-hook. With the hotline function, which is a point-to-point communications link, a call is automatically directed to the preselected destination to the pre-defined party without any additional action by the user when the end instrument goes off-hook or by some other physical move of the phone. Typically, the hot-line function connects a call to IVR assistance, Call-ring (sequential or parallel hunting of the pre-defined parties) or directly to the final destination (the called party number).

The call service can have the hot-line function to connect a call or other kind of notification to one or more pre-defined parties without the need of dialling any telehone number or even any short-dial code. The hot-line function causes the phone to connect to the pre-defines party/parties upon some movement of the phone. The movement might consist in e.g. shaking the phone or lifting up the hook. In that case, the hot-line function can start an emergency function or the notification function or is identical with them. These functions are alternatively actuated by a short-dial code of the phone possible selected by the user guided by a voice menu.

### Emergency function

The emergency function, which can be a help-request function, is actuated to be forwarded to one or more pre-defined parties.

Furthermore, the interactive function can directly activate a notification, which is an emergency function e.g. in the form of a hot-line function to be forwarded to one or more pre-defined parties, which can be actuated by a physical quick move of the mobile phone, if the device is not connected to the telecommunication network, when the geographical coordinates of the mobile phone as positioned by the Global Positioning System, GPS, are outside a given area and/or they have not been changed for a set time. This might mean that the user has not moved for a while where after a time scheduled or machine-learned emergency function is generated as an automatic help-request to one or more pre-defined parties. The emergency function or notification can thus be actuated by a timer, when the user of the device has not called at least one of the pre-defined parties for a set time.

The function of the timer can also be combined with the positioning function so that the coordinates of the device, which can be a mobile phone as positioned by the Global Positioning System (GPS) are informed in the notification to be sent to the pre-defined party/parties.

Still further, the emergency function can be activated by **an accelerometer** when an accelerometer in or close to the mobile phone of the user identifies falling of the user carrying the mobile phone.

### Blocking function

The telephony service can further comprise **a blocking function,** which blocks calls to and from numbers outside a pre-defined list of numbers, e.g. a black list. The blocking function can in some embodiment be by-passed with a PIN- code.

### Blind or attended call transfer function

A blind or attended call transfer function connects a call to the notification function or to one or more predefined parties if the blocking function has blocked the incoming call, where after the call can if desired be transferred to the user of the user device by the notified pre-defined party. An attended call can be a normal call to a caregiver or the like or other pre-defined party, who helps the user of the device to transfer the call to a desired target number.

### Recording function

A recording function can record all calls from unknown numbers not belonging to a pre-defined list.

The function is very useful e.g. in a situation, wherein someone is calling to the user device, such as to a senior, from an unknown A number, whereby the call is an incoming call going via the telephony service. In an embodiment, wherein this called is let through, the user device, which is the B-number, is ringing normally or is blinking.

The user then answers the phone since this embodiment allows calls to the B-number, but the calls can be recorded and be activated e.g. with a code input by the user.

A message in some form is sent to a pre-defined party, who can listen at the call during the call or afterwards. The pre-defined party may be of the opinion that the number of the caller should be included in the black list to be a number to be blocked by the telephony service (for example if the caller seems to try to sell unnecessary things or seems to be a swindler). The pre-defined party (such as a care giver) can then and the number to the black list. If the caller again tries to call to the user, the user device does not ring or even blink.

### Advantages of the telephony service of the invention

The object of the invention is that the user device enables a comprehensive telephony service so that the user can be accessed anytime and anywhere and if not being able to be personally contacted, uses alternative functions, such as call completion functions. The user of the device can also easily, by using the device, access pre-defined parties through the telephony service without having to perform more complicated acts than to press on a button on the device and hear instructions or by a simple move of the phone. Such pre-defined parties can be defined in a list of telephone numbers (such as a white list) in a database connected to the telephony service.

The object of the invention is enabled by some interactive functions which are automatically activated at given situations at incoming and outgoing calls between called and caller parties who cannot converse directly with each other at an instant call or immediately after on-line checking for allowance/blocking of calling party. Some interactive functions can be activated by user action.

The telephony service is especially meant for seniors as a service for safety care and can have many different functions that complement and/or depend on eachother. The senior is the user of the device and can either be the caller or the called party (callée). The at least one pre-defined other party can e.g. be a family member, a friend, a close person, a relative, a care giver or any person that takes care or monitor the well-being of the user of the device phone. The telephony service can also be useful for e.g. children or disabled persons or other persons, such as e.g. sick persons, persons with a certain disease or persons that ca not see very well.

The telephony service of the invention provides a reliable and user-friendly personal help aid to the user of the device. It has a controlled connection with an excellent accessibility. Thanks to its versatile service functions that support eachother it provides a great support for the safety of the user of the device.

Also functions that are known in themselves can be included in the telephony service in a new way to cooperate with the new functions thereby creating a comprehensive safety concept.

Calls from unknown persons can e.g. be blocked, and known persons be autoprovisioned with own personal signals sounds, such as ringtones. The device can even be equipped with a voice guide, which actuates upon certain triggers.

### Some important functions

- Easy use and accessibility (it is not necessary for the user to dial any numbers, to select any short-dial codes or to select any functions. Upon a call to the one or more pre-defined parties, a message by e.g. e-mail s forwarded to these parties if no one answers the call. One of the pre-defined parties answers the call and sends a message to the other parties, a sc. confirmation message that the call has been handled, e.g. with a REPLY ALL function)
- The accessibility of the user of the device is guaranteed. The user of the device, (such as a senior or a person with reduced mobility) can be reached by means of the forwarding function in spite of that the called user can not answer.(The two-step incoming call, in which the SIP INVITE call info header is used in a second outgoing call leg. An autoprovisioned dynamic ringtone is used in the first outgoing call leg. A harmonic ring tone is used in the second outgoing call leg, wherein the call info header instruct with additional parameters to answer after e.g. 5 seconds (ASWER AFTER) and to put a loudspeaker on (DEVICE = Speaker ON). The function works even if the hook is off in contrary to a telephone with two lines, wherein the other line has a provisioned Auto Answer. The alt mentioned is also a part of the invention.

The user, who can be a senior, a junior, a person with some disability can decide by herself/himself, if he/she wants to receive the call:
The telephony service checks if the user wants to receive the call by means of a database or by means of an external list of numbers over internet or an Application Programming Interface (API). After having fetched the name of the caller, the name is read aloud by a robot after which the user can decide to receive the call or not. If the call is coming from e.g. another country, then this information is also read aloud.

If the user wants to receive the call he/she waits or instructed to wait, where after the call is connected. Otherwise, he/she shuts the device, and the caller can leave a voice message. The user can speed up the answering by an input of some number (e.g. "5" (IVR) or flash" by using an old rotary dial telephone, an on/off hook finger touch), if the ATA adapter functionality can recognize this line change. Usually it does, since the "pulses" (number selections) are mediated as pulses.
- An acceptance of the 2-step call. The user can hear that a call is going on and meantime a normal auto-answer is connected to the smart line device, which can be an analog telephone behind an ATA adapter. This is because, even if there would be a modern IP device on the number display, the senior does not necessarily see or identify an external number.
- A B-signal answer can be triggered later by the telephony service when the service knows that the user wants to receive the call or the call goes to the voice mail (the call can go to the voice mail if the user (here called party, i.e. B-number) puts off the hook before the parties are connected after a pre-define time limit by time control)

- The telephony service furthermore can have automatically activated auto-provisioned information messages heard by the user both in connection with an outgoing call when an IVR menu is activated (can be auto-provisioned in the menu of the device memory or the service can produce dynamic information messages over the VoIP connection.
- The notifications and automated calls, such as calls out of the blue) to both parties (caller and callée). One of the parties can instead of a human e.g. be an IVR/Speech-To-Text (STT)/radio-channel-audiostream on the Internet).
- The telephony service also includes scheduled notifications and automated calls, such as calls out of the blue that require answering. In such an embodiment, the telephony service first contacts one of pre-defined parties (which can be members of a carer team) and then the user (such as a senior) in order to establish a care giving call. A notification is sent from the telephony service in the form of a first outgoing call leg (a so called A-leg) to a first pre-defined party (party 1). If party 1 does not answer, a B-leg is sent as an outgoing leg to a second pre-defined party (party 2) and so on until some of the pre-defined parties answers (party n) and takes the call. Party n then calls the user and performs the care giving call.
- One useful additional function provided by the telephony service when the user device has no number display (for example a telephone connected by ATA) or when the user does not see very well can be used in a situation where someone not blocked and who can e.g. be a friend calls. A first signal from the friend is received as an incoming call leg to the telephony service, which is normally forwarded by the telephony service as an outgoing call leg from the telephony service. The user then lifts handset off-hook and can hear who is calling, whereby the friend can hear a normal ring signal or normal ring-back tone. In the next step a voice mail or a callback is sent to the friend if the user does not answer or ends the call too quickly. Thereafter, the friend can talk with the user since the number of the friend has been included in a list of allowable numbers, such as a white list.
- One further useful additional function provided by the telephony service when the user of the user device selects a number of e.g. a friend for the first time (or alternatively, when someone assists the user from his own device by e.g. a blind transfer function). A voice menu might then ask whether the number should be included in some list, such as a white list, I which case, the user is asked to press on a button. Then the call is, however, forwarded. The call goes via the telephony service, which identifies that the friend (also) has this telephony service and a call request service, whereby a call back is ordered by the telephony service. As the friend does not answer, the call request service function is activated. A call might be regularly then sent/forwarded to the friend, such as every hour. When the friend comes home, he answers the call and the user can then answer since the call was forwarded to the user.
- A stepwise automatic answer function could be used in scheduled notifications, and by using a harmonic ringtone as an indication of an automatic answer function, and by an open line function for services, like weather forecasts, and the like. An emergency function or an override function could interrupt such an open line function.
- Further functions include quick start functions (by pressing a button) for preferred content, for a daily conference, or for attending local activities.
- In one embodiment, the caller can hear a disturbance information or error information, an exceptional signal or a mute (voiceless) line.
- A useful function is the filtering/screening of incoming calls to be loudly, whereby the special ringtone is changed by the telephony service so that it can be better heard.
- All the calls to the user might be filtered at home but outside, a tracker device is an additional security. An incoming call to a GSM number of the device might first ring in the mobile device but be forwarded to the user device via the telephony service.

In the following, the invention will be described by some example embodiments by referring to figures. The invention is not restricted to the details of the examples and the figures.

### FIGURES

Figure 1 is an architecture view of a system, wherein the invention can be implemented
Figure 2 presents an embodiment of the invention, wherein a transfer function and an interactive voice call is actuated at an incoming call
Figure 3 presents an embodiment of the invention, wherein a transfer function and an interactive voice call is actuated at an outgoing call
Figure 4 presents an embodiment of the invention, wherein a notification is actuated
Figure 5 presents an embodiment of the invention, wherein a blocking and a blind transfer function are actuated

### DETAILED DESCRIPTION

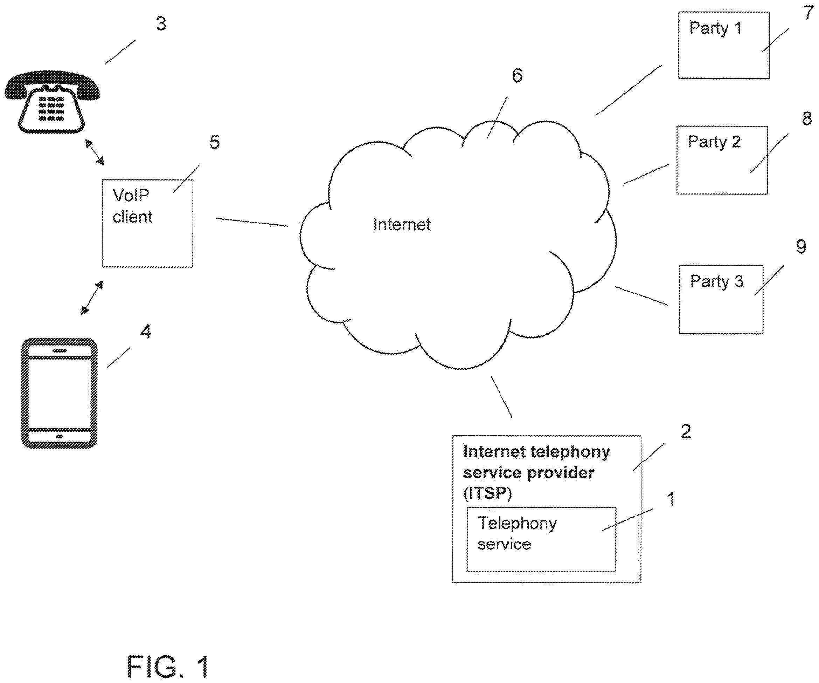

Figure 1 is an architecture view of a system, wherein the invention can be implemented. The invention consists of a telephony service 1 provided by a service provider (SP), which can be an Internet Telephony Service Provider (ITSP) 2 or other service provider. The service is especially meant for senior users of fixed telephones 3 or mobile telephones 4. Only one of both types are seen in the figure since the invention is explained in the view of one user of illustrative purposes.

The Internet Telephony Service Provider (ITSP) 2 offers digital telecommunications services based on Voice over Internet Protocol (VoIP) that are provisioned via the Internet. ITSPs provide services to end-users directly and use a variety of signaling and multimedia protocols, including the Session Initiation Protocol (SIP).

The call service 1 is a cloud service in the Internet and works towards user devices, which enable the processing of voice communication via the Internet Protocol, i.e. Internet Protocol (IP) phones having a Voice over Internet protocol (VoIP) client 5 therefore.

There is an Internet protocol (VoIP) client 5 in the fixed telephone 3 or mobile telephone 4 (drawn outside of the devices by using a double arrow in the figure of illustrative reasons) via which the user is in contact with the call service provided by the ITSP 2 over the Internet 6.

The telephones can also be connected to telephone networks, such as Integrated Services Digital Network (ISDN), Global System for Mobile Communications (GSM), or the Public Switched Telephone Network (PSTN).

Thus, the telephony service 1 allows the user to use a fixed telephone 3 or a mobile phone 4. The user telephones 3 and 4 are VoIP phones or IP phones and use voice over IP technologies for placing and transmitting telephone calls over an IP network. Voice over Internet Protocol (also voice over IP, VoIP or IP telephony) is a technology for the delivery of voice communications and multimedia sessions over Internet Protocol (IP) networks, such as the Internet.

The steps and principles involved in originating VoIP telephone calls are similar to traditional digital telephony and involve signaling, channel setup, digitization of the analog voice signals, and encoding. Instead of being transmitted over a circuit-switched network, the digital information is packetized, and transmission occurs as IP packets over a packet-switched network.

Reference numbers 7, 8, and 9 are third party telephones or other third-party devices that also communicate over the Internet with the fixed telephone 3 or mobile telephone 4 and with the ITSP 2. The third-party devices 7, 8, and 9 might be fixed or mobile as well and they can be e.g. VoIP devices, GSM phones or phones communicating over wired networks. The calls from and to fixed telephones of third parties takes place over the Public Switched Telephone Network (PSTN), whereas the mobiles phones of third parties use the GSM (Global System for Mobile Communications, which is a standard developed by the European Telecommunications Standards Institute (ETSI) to describe the protocols for second-generation digital cellular networks used by mobile devices such as tablets and mobile telephones.

IP Telephony is a way of making a phone system digital to take advantage of the internet and any hardware or applications attached to it. IP telephony (Internet Protocol telephony) and Voice over IP (VoIP) phone is used within the telecommunications network of figure 1 when a phone 3 or 4 communicates with the Telephony service 1. In IP telephony, the technology uses the IP protocol to exchange voice, fax, and other forms of information, traditionally carried over the Public Switched Telephone Network (PSTN). The calls in IP telephony travels in the form of packets, over the Internet. The third-party user devices can also communicate with the telephony service over the Internet by some known internet access technology.

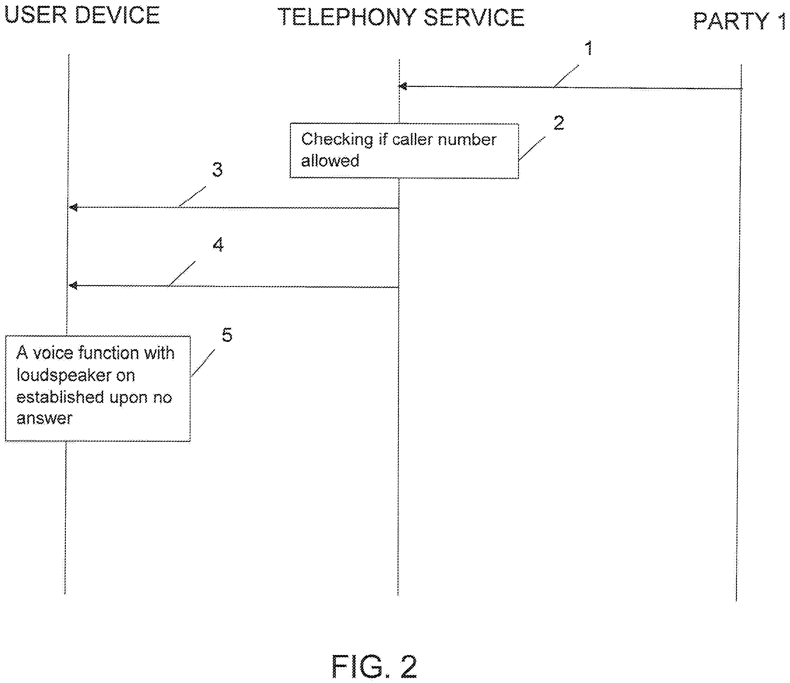

Figure 2 presents an embodiment of the invention, wherein an interactive voice call is actuated in a network of figure 1. An interactive voice call is actuated at a call to the user device.

It is assumed that a pre-defined party called party 1 in figure 2, makes a call (the A-number) to the user device (to the B-number). The number of the user device is connected to the telephony service and therefore all calls as well as this call to this number go via the telephony service, which is indicated with signal 1 in figure 2.

The service checks in step 2, if the telephone number of party 1 that tries to call to the user device is blocked or has the right to make calls to the user device. This can in the invention be done in different ways. One possibility is to check a black list and/or a white list. If the number is in the white list and/or is not in the black, the call is forwarded to the user device, which is indicated with signal 3 in figure 1.

The call in signal 3 is a first outgoing call leg attempt from the telephony service and is set up by the telephony service with a call invite message according to the SIP protocol by using a standard header.

The call causes a ring or voice signal, which signal preferably is personal so that the user of the user device knows who is calling.

The user, however, does not answer the call. As the number of the caller is in a list causing an interactive function to actuate after a given programmed time, the telephony service makes a second outgoing call leg attempt to the user device if there is no answer after a set time, which is shown as signal 4 in figure 2. If the line is occupied, the caller hears the characteristic occupied tone for that and ends the call.

The second outgoing call leg attempt is set up by making use of the Call-Info header field of the SIP for providing additional information, which additional information set the loudspeaker on to start a bidirectional voice function automatically if the user has not answered after a time defined.

A voice channel is automatically established in step 5 with the loudspeaker on, in which the caller can speak in the user's device even if the user has not answered.

This is advantageous if e.g. the senior after an accident can not answer or does not hear the signal, whereby the call is connected anyway and the caller can by loudly speaking get contact.

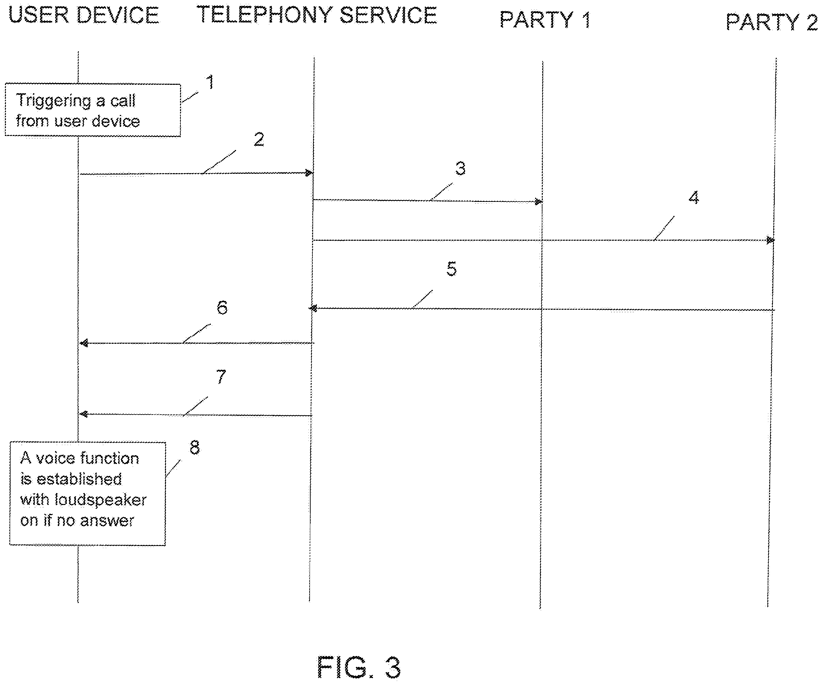

Figure 3 presents a first embodiment of the invention, wherein a forwarding function and an interactive voice call is actuated at an outgoing call.

Here, a call from the user device can start in step 1 in different ways. The user of the user device might e.g. press on an emergency button, a sensor sensing an accident might trigger an outgoing call, the GPS coordinates of the user device (as informed to the telephony service) might be outside a given area, or the user device is not registered to the network.

A call in the form of an incoming call to the telephony service is therefore actuated in signal 2.

The telephony service then forwards the call to one or more predefined parties in signal 3. In this figure 3, it assumed that the call first goes to only one pre-defined party and then successively to other pre-defined parties until someone answers.

Party 1 did not answer and therefore the call is forwarded to party 2 in signal 4.

Party 2 answers and depending on what type of outgoing call it is, party 2 might hear a voice message telling the situation of the user.

Party 2 then calls the user in signal 5 and the call goes through the telephony service, which forwards the call in signal 6 as an outgoing call leg to the user device.

The user, however, does not answer the call. As the number of the caller is in a list causing an interactive function to actuate after a given programmed time, the telephony service makes a second outgoing call leg to the user device, which is shown as signal 7 in figure 3.

The second outgoing call leg is set up by making use of the Call-Info header field of the SIP for providing additional information, which additional information set the loudspeaker on to start a bidirectional voice function automatically if the user has not answered after a time defined.

A voice call is then automatically established in step 8 with the loudspeaker on, in which the caller can speak in the user's device even if the user has not answered.

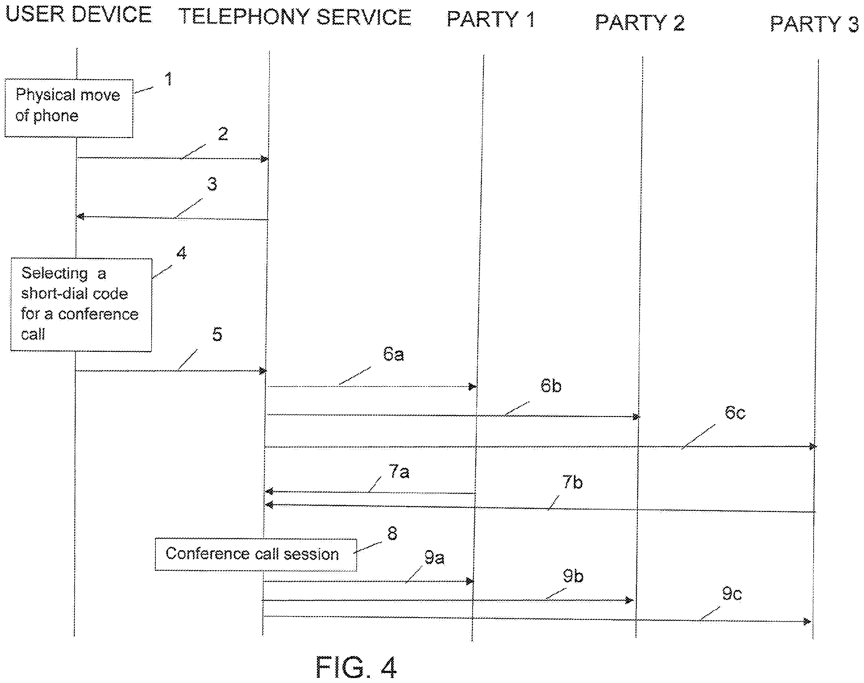

Figure 4 presents an embodiment of the invention, wherein a notification is actuated.

It is assumed that the user of the device initiates a call by a physical act on the device (e.g. a telephone), such as lifting handset off the hook, which is indicated with step 1 in figure 4.

A signal 2 goes to the telephony service resulting in an interactive function in the form of a voice menu being started, which is indicated by signal 3. The user can hear advise in his user device in the form of a recorded voice menu for taking a short-dial code to know on which number button to press to different recipients,

In this example, the user selects the button having a short-dial code for a conference call, which is indicated as step 4.

Step 4 results in a notification call being a conference call invitation to pre-defined parties (three parties in this example.

The conference call invitation goes via the telephone service, which is indicated as signal 5.

The outgoing conference call invitations as forwarded to the pre-defined parties 1 - 3 are indicated with reference numbers 6a - 6c. The notification to parties 1 - 3 has information of a dialling number how to attend the conference and may be sent as an ordinary call, by Short Message Service (SMS), by e-mail or e.g. Whatsapp or by other messaging means.

As seen in figure 4, the conference is then attended by Party 1 and party 3 by dialling the informed number, which is indicated by signals7a and 7b. In some embodiments input of an attendance code might be necessary to attend the conference.

The conference session is then kept as is indicated by step 8.

After step 8, a confirmation function sends a confirmation to all the invited pre-defined parties that the notification has been handled. These confirmation messages are presented as signals 9a - 9c.

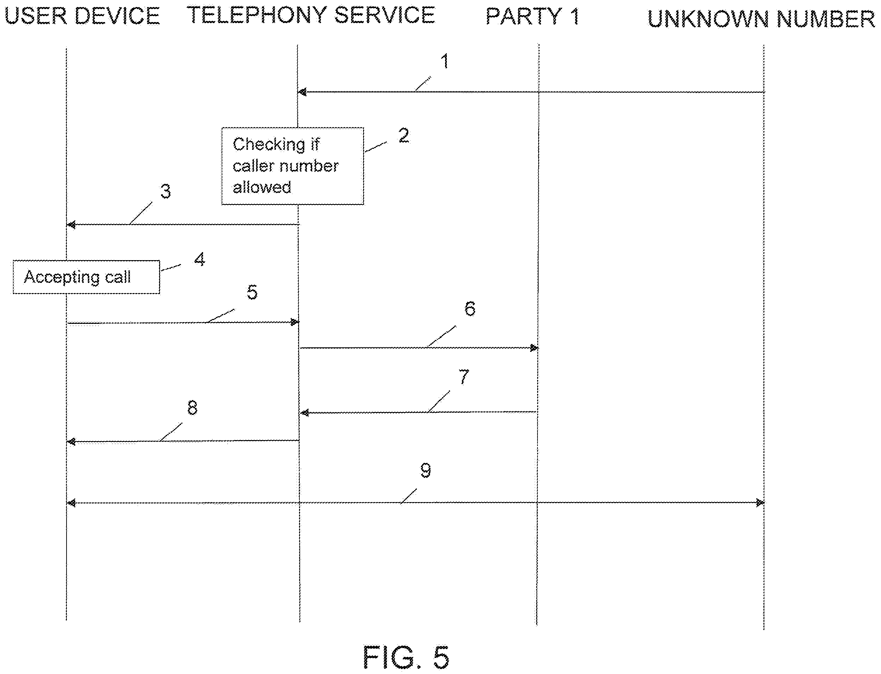

Figure 5 presents an embodiment of the invention, wherein a blocking and a blind transfer function are actuated.

Here a person, that here is assumed to be an old friend tries to call to the user, which is shown in signal 1. As all calls to the user device goes via telephony service, this also takes place now.

The telephone service then checks in step 2, whether this number has the right to call to the user device. It might be in black list (of numbers to be blocked) or in a white list (calls from which can be forwarded). This number belonged to neither one, so the number will be temporarily blocked but handled in a certain way.

In signal 3, the telephony service sends a signal resulting in blinking in the user device and the user is given the opportunity to take the call (he might e.g. know who is calling on the basis of the number or in some other way).

In step 4, the user accepts the call, and the information of acceptance goes to the telephony service in signal 5. The acceptance can e.g. be performed by just keeping the handset off the hook.

In signal 6, the telephony service forwards a message to a pre-defined party (party 1 in the figure) and party 1 makes a blind call transfer so that the caller and the user can be connected. This is shown by signals 7 and 8 as an information to the telephony service (signal 7) and the telephony service connecting the call (signal 8).

Double-arrow 9 shows that a session between the caller and the user has been established.

## Claims

1. A telephony service (1) for caller and called parties in different telecommunication networks, whereby the telephony service is a cloud service in the Internet and allows the use of a fixed telephone (3) or a mobile telephone (4), the telephony service (1) is configured to control and assist calls through the telephony service (1) between a user device party (3, 4) and one or more devices of pre-defined other parties (7, 8, 9),
**characterize****d** by
the telephony service (1) activating an alternative function at an instant or intended call to one of the parties (3, 4, 7, 8, 9) for secure accessibility at outgoing and incoming calls from and to the telephony service (1), when the called party does not answer, said alternative function involving a forwarding function and a voice function,
which forwarding function relocates a first outgoing call leg attempt to the user device party (3, 4) back as a second call leg attempt if the user does not answer the first outgoing call leg attempt after a certain time period, whereby the voice function is automatically activated,
the voice function being one of a special harmonic ring tone, a pre-recorded announcement, a melody for the user device, a pre-recorded/dynamic Text-To-Speech, TTS, announcement to be played by the telephony service in order to pay special attention for an incoming auto-answer call and the
second outgoing voice call attemptis automatically answered with the loudspeaker on, whereby said alternative function is administered by means of a connected database, which defines the situations for activating said alternative function.

2. A telephony service (1) of claim 1, wherein the connected database administering the said alternative functions further defines
a list of pre-defined parties to be involved in alternative function,
a white list of pre-defined parties causing a call with a special ring signal to the user device that can be connected,
a black list of pre-defined numbers to be blocked in an attempted incoming call to the user device, and
a list of pre-defined numbers blocked for outgoing calls.

3. A telephony service of claim 1 or 2, wherein it manages several user devices (3, 4) and have personally provisioned alternative functions to be activated depending on or from which user device the outgoing and incoming calls take place with.

4. A telephony service (1) of any of claims 1 - 3, wherein the alternative interactive function can be activated at an intended call after an on-line checking by the telephony service (1) whether the incoming call comes from an allowable number for allowance or blocking of the call.

5. A telephony service (1) of claim 1, **characterized in that** said alternative function is activated by the telephony service (1) in situations when the user device (3, 4) is off-hook, the called party does not answer, the called party is busy in another call, the called party is off-line or unavailable or not connected to the telecommunication network, the called party actively disconnects the call before answering, or the called party activates the alternative interactive function by means of a short-dial code, by dialling a service number, by a physical move of the user device (3, 4), or as a result of machine-learning, or the alternative function is activated by a timer function, or a sensor.

6. A telephony service (1) of claim 1, **characterized in that** said alternative function is a call completion function involving, in addition to a voice function such as a loudspeaker function, an override function, and in addition to a forwarding function, a call transfer function, an automatic redial, a notification function, a hot-line function, an emergency function, a blind or attended transfer function, an Artificial Intelligence, Al, function and/or a recording function.

7. A telephony service (1) of claim 6 **characterized in that** said notification function is followed by a confirmation function for confirming for the predefined parties (7, 8, 9) that that the call has been handled, whereby the notification and/or the confirmation is sent e.g. as a telephone call, by Short Message Service, SMS, by e-mail, by Whatsapp or other messaging means.

8. A telephony service (1) of any of claims 1 - 6, wherein the forwarding function relocates a first outgoing call leg attempt to the user device (3, 4) back as a second outgoing call leg attempt through the same line but another user device of the user than to that used for the first outgoing call leg if the user does not answer the first outgoing call leg attempt after a certain time period, whereby the voice function is activated.

9. A telephony service (1) of any of claims 1 - 6, wherein the wherein the forwarding function relocates a first outgoing call leg attempt to the user device (3, 4) back as a second outgoing call leg attempt through the same line and to the same number and user device of the user as that used for the first outgoing call leg attempt if the user does not answer the first outgoing call leg attempt after a certain time period, whereby the voice function is activated.

10. A telephony service (1) of claim 7 or 8, wherein the first outgoing call leg attempt is set up by the service using the standard Session Initiation Protocol, SIP, and the second outgoing call attempt is set up by the service using the SIP Call-Info header field for
providing additional information, which additional information set the loudspeaker on to start a bidirectional voice function automatically if the user has not answered after a time defined.

11. A telephony service (1) of claim 6, wherein the **notification function** is actuated in the form of an automatic call as initiated by the telephony service (1) when the user of the user device (3, 4) has not answered to a call from at least one of the pre-defined parties (7, 8, 9) for a set time.

14. A telephony service (1) of claim 1, further comprising **a blocking function,** which blocks calls to and from numbers outside a pre-defined list of numbers, whereby the blocking function can be by-passed with a PIN-code.

15. A telephony service (1) of claim 1, **characterized in that** it can be administered by the one or more pre-defined parties, via a function call, an IVR function, or via an APP in the device of the one or more pre-defined party.

## Patentansprüche

1. Ein Telefondienst (1) für anrufende und angerufene Parteien in verschiedenen Telekommunikationsnetzen, wobei der Telefondienst ein Cloud-Dienst im Internet ist und die Verwendung eines Festnetztelefons (3) oder eines Mobiltelefons (4) ermöglicht, der Telefondienst (1) ist konfiguriert, um Anrufe durch den Telefondienst (1) zwischen einer Benutzergerätepartei (3, 4) und einem oder mehreren Geräten vordefinierter anderer Parteien (7, 8, 9) zu steuern und zu unterstützen, **gekennzeichnet durch**
den Telefondienst (1), der eine alternative Funktion bei einem sofortigen oder beabsichtigten Anruf an eine der Parteien (3, 4, 7, 8, 9) zur sicheren Zugänglichkeit bei ausgehenden und eingehenden Anrufen vom und zum Telefondienst (1) aktiviert, wenn die angerufene Partei nicht antwortet, diese alternative Funktion umfasst eine Weiterleitungs- und eine Sprachfunktion,
wobei die Weiterleitungsfunktion einen ersten ausgehenden Anrufversuch zur Benutzergerätepartei (3, 4) zurückverlegt, wenn der Benutzer nach einem bestimmten Zeitraum nicht auf den ersten ausgehenden Anrufversuch antwortet, wobei die Sprachfunktion automatisch aktiviert wird,
die Sprachfunktion ist eine von einer speziellen harmonischen Klingelton, einer vorab aufgezeichneten Ankündigung, einer Melodie für das Benutzergerät, einer vorab aufgezeichneten/dynamischen Text-to-Speech, TTS, Ankündigung, die vom Telefoniedienst gespielt wird, um besondere Aufmerksamkeit für einen eingehenden Auto-Answer-Anruf zu erregen, und
der zweite ausgehende Sprachanrufversuch wird automatisch mit eingeschaltetem Lautsprecher beantwortet, wobei diese alternative Funktion durch eine verbundene Datenbank verwaltet wird, die die Situationen für die Aktivierung dieser alternativen Funktion definiert.

2. Ein Telefondienst (1) nach Anspruch 1, bei dem die verbundene Datenbank, die die genannten alternativen Funktionen verwaltet, weiterhin definiert
eine Liste vordefinierter Parteien, die an der alternativen Funktion beteiligt sein sollen,
eine Weiße Liste vordefinierter Parteien, die einen Anruf mit einem speziellen Rufton an das Benutzergerät auslösen können, das verbunden werden kann,
eine Schwarze Liste vordefinierter Nummern, die in einem versuchten eingehenden Anruf zum Benutzergerät blockiert werden sollen, und
eine Liste vordefinierter Nummern, die für ausgehende Anrufe blockiert sind.

3. Ein Telefondienst nach Anspruch 1 oder 2, bei dem mehrere Benutzergeräte (3, 4) verwaltet werden und persönlich bereitgestellte alternative Funktionen aktiviert werden können, abhängig davon, von welchem Benutzergerät aus ausgehende und eingehende Anrufe stattfinden.

4. Ein Telefondienst (1) nach einer der Ansprüche 1 - 3, bei dem die alternative interaktive Funktion bei einem beabsichtigten Anruf nach einer Online-Überprüfung durch den Telefondienst (1) aktiviert werden kann, um festzustellen, ob der eingehende Anruf von einer zulässigen Nummer für die Zulassung oder Blockierung des Anrufs kommt.

5. Ein Telefondienst (1) nach Anspruch 1, **gekennzeichnet durch** die Tatsache, dass diese alternative Funktion **durch** den Telefondienst (1) in Situationen aktiviert wird, in denen das Benutzergerät (3, 4) abgehoben ist, die angerufene Partei nicht antwortet, die angerufene Partei in einem anderen Anruf beschäftigt ist, die angerufene Partei offline oder nicht verfügbar ist oder nicht mit dem Telekommunikationsnetz verbunden ist, die angerufene Partei den Anruf aktiv vor dem Abheben abbricht oder die angerufene Partei die alternative interaktive Funktion **durch** eine Kurzwahl, **durch** Wählen einer Servicenummer, **durch** eine physische Bewegung des Benutzergeräts (3, 4) oder als Ergebnis von maschinellem Lernen aktiviert, oder die alternative Funktion **durch** eine Timer-Funktion oder einen Sensor aktiviert wird.

6. Ein Telefondienst (1) nach Anspruch 1, **gekennzeichnet durch** die Tatsache, dass diese alternative Funktion eine Anrufabschlussfunktion ist, die neben einer Sprachfunktion wie einer Lautsprecherfunktion eine Übersteuerungsfunktion sowie zusätzlich zu einer Weiterleitungsfunktion eine Anrufübertragungsfunktion, eine automatische Wahlwiederholung, eine Benachrichtigungsfunktion, eine Hotline-Funktion, eine Notfallfunktion, eine blinde oder assistierte Übertragungsfunktion, eine Funktion für künstliche Intelligenz, Kl, und/oder eine Aufzeichnungsfunktion umfasst.

7. Ein Telefondienst (1) nach Anspruch 6, **gekennzeichnet durch** die Tatsache, dass diese Benachrichtigungsfunktion von einer Bestätigungsfunktion für die vordefinierten Parteien (7, 8, 9) gefolgt wird, dass der Anruf behandelt wurde, wobei die Benachrichtigung und/oder die Bestätigung beispielsweise als Telefonanruf, per Kurznachrichtendienst, SMS, per E-Mail, per WhatsApp oder auf andere Weise gesendet wird.

8. Ein Telefondienst (1) nach einer der Ansprüche 1 - 6, bei dem die Weiterleitungsfunktion einen ersten ausgehenden Anrufversuch zum Benutzergerät (3, 4) zurückverlegt, wenn der Benutzer nach einer bestimmten Zeit nicht auf den ersten ausgehenden Anrufversuch antwortet, wobei die Sprachfunktion aktiviert wird, jedoch durch dieselbe Leitung, aber durch ein anderes Benutzergerät des Benutzers als dasjenige, das für den ersten ausgehenden Anrufversuch verwendet wurde.

9. Ein Telefondienst (1) nach einer der Ansprüche 1 - 6, bei dem die Weiterleitungsfunktion einen ersten ausgehenden Anrufversuch zum Benutzergerät (3, 4) zurückverlegt, wenn der Benutzer nach einer bestimmten Zeit nicht auf den ersten ausgehenden Anrufversuch antwortet, jedoch durch dieselbe Leitung und zur gleichen Nummer und zum gleichen Benutzergerät des Benutzers wie dasjenige, das für den ersten ausgehenden Anrufversuch verwendet wurde, wobei die Sprachfunktion aktiviert wird.

10. Ein Telefondienst (1) nach Anspruch 7 oder 8, bei dem der erste ausgehende Anrufversuch durch den Dienst unter Verwendung des Standard Session Initiation Protocol, SIP, eingerichtet wird und der zweite ausgehende Anrufversuch durch den Dienst unter Verwendung des SIP Call-Info-Header-Felds für die Bereitstellung zusätzlicher Informationen eingerichtet wird, wobei diese zusätzlichen Informationen den Lautsprecher einschalten, um automatisch eine bidirektionale Sprachfunktion zu starten, wenn der Benutzer nach einer definierten Zeit nicht geantwortet hat.

11. Ein Telefondienst (1) nach Anspruch 6, bei dem die **Benachrichtigungsfunktion** in Form eines automatischen Anrufs aktiviert wird, der vom Telefondienst (1) initiiert wird, wenn der Benutzer des Benutzergeräts (3, 4) nicht auf einen Anruf von mindestens einer der vordefinierten Parteien (7, 8, 9) für eine bestimmte Zeit antwortet.

12. Ein Telefondienst (1) nach Anspruch 1, der zusätzlich eine **Blockierungsfunktion** umfasst, die Anrufe zu und von Nummern außerhalb einer vordefinierten Liste von Nummern blockiert, wobei die Blockierungsfunktion mit einer PIN-Nummer umgangen werden kann.

13. Ein Telefondienst (1) nach Anspruch 1, **gekennzeichnet durch** die Tatsache, dass er von einer oder mehreren vordefinierten Parteien über einen Funktionsaufruf, eine IVR-Funktion oder über eine APP im Gerät einer oder mehrerer vordefinierter Parteien verwaltet werden kann.

## Revendications

1. Un service de téléphonie (1) destiné aux parties appelante et appelée dans différents réseaux de télécommunication, le service de téléphonie étant un service cloud sur Internet et permettant l'utilisation d'un téléphone fixe (3) ou d'un téléphone mobile (4), le service de téléphonie (1) étant configuré pour contrôler et assister les appels à travers le service de téléphonie (1) entre un dispositif utilisateur (3, 4) et un ou plusieurs dispositifs d'autres parties prédéfinies (7, 8, 9),
**caractérisé par**
le service de téléphonie (1) activant une fonction alternative à un instant ou à un appel prévu à l'une des parties (3, 4, 7, 8, 9) pour une accessibilité sécurisée aux appels sortants et entrants du et vers le service de téléphonie (1), lorsque la partie appelée ne répond pas, ladite fonction alternative impliquant une fonction de transfert et une fonction vocale,
laquelle fonction de transfert relocalise une première tentative d'appel sortant vers le dispositif utilisateur (3, 4) en tant que deuxième tentative d'appel sortant si l'utilisateur ne répond pas à la première tentative d'appel sortant après un certain laps de temps, la fonction vocale étant automatiquement activée,
la fonction vocale étant l'une des suivantes : une sonnerie spéciale harmonique, une annonce préenregistrée, une mélodie pour le dispositif utilisateur, une annonce préenregistrée/dynamique de synthèse vocale, TTS, à jouer par le service téléphonique pour attirer l'attention sur un appel automatique entrant et
la deuxième tentative d'appel sortant est automatiquement répondue avec le haut-parleur activé,
ladite fonction alternative étant gérée au moyen d'une base de données connectée, qui définit les situations pour l'activation de ladite fonction alternative.

2. Un service de téléphonie (1) selon la revendication 1, dans lequel la base de données connectée administrant lesdites fonctions alternatives définit également
une liste de parties prédéfinies à impliquer dans la fonction alternative
une liste blanche de parties prédéfinies provoquant un appel avec une sonnerie spéciale au dispositif utilisateur qui peut être connecté,
une liste noire de numéros prédéfinis à bloquer dans une tentative d'appel entrant au dispositif utilisateur, et
une liste de numéros prédéfinis bloqués pour les appels sortants.

3. Un service de téléphonie selon la revendication 1 ou 2, gérant plusieurs dispositifs utilisateurs (3, 4) et ayant des fonctions alternatives personnellement provisionnées à activer en fonction de l'appareil utilisateur à partir duquel les appels sortants et entrants ont lieu.

4. Un service de téléphonie (1) de l'une quelconque des revendications 1 à 3, dans lequel la fonction interactive alternative peut être activée lors d'un appel prévu après une vérification en ligne par le service de téléphonie (1) pour déterminer si l'appel entrant provient d'un numéro autorisé pour l'autorisation ou le blocage de l'appel.

5. Un service de téléphonie (1) de la revendication 1, **caractérisé**en ce que ladite fonction alternative est activée par le service de téléphonie (1) dans des situations où le dispositif utilisateur (3, 4) est décroché, la partie appelée ne répond pas, la partie appelée est occupée dans un autre appel, la partie appelée est hors ligne ou indisponible ou non connectée au réseau de télécommunication, la partie appelée active délibérément la fonction interactive alternative par le biais d'un code de numérotation rapide, en composant un numéro de service, en effectuant un mouvement physique du dispositif utilisateur (3, 4), ou en raison de l'apprentissage automatique, ou la fonction alternative est activée par une fonction de minuterie, ou un capteur.

6. Un service de téléphonie (1) de la revendication 1, **caractérisé en ce que** ladite fonction alternative est une fonction de complétion d'appel impliquant, en plus d'une fonction vocale telle qu'une fonction de haut-parleur, une fonction de contournement, et en plus d'une fonction de transfert, une fonction de transfert d'appel, une numérotation automatique, une fonction de notification, une fonction de ligne directe, une fonction d'urgence, une fonction de transfert en aveugle ou assisté, une fonction d'intelligence Artificielle, lA, et/ou une fonction d'enregistrement.

7. Un service de téléphonie (1) de la revendication 6, **caractérisé en ce que** ladite fonction de notification est suivie d'une fonction de confirmation pour confirmer aux parties prédéfinies (7, 8, 9) que l'appel a été traité, la notification et/ou la confirmation étant envoyée par exemple sous forme d'appel téléphonique, par Service de Messagerie Court, SMS, par e-mail, par WhatsApp ou autres moyens de messagerie.

8. Un service de téléphonie (1) de l'une quelconque des revendications 1 à 6, dans lequel la fonction de transfert relocalise une première tentative d'appel sortant vers le dispositif utilisateur (3, 4) en tant que deuxième tentative d'appel sortant par la même ligne mais vers un autre dispositif utilisateur de l'utilisateur que celui utilisé pour la première tentative d'appel sortant si l'utilisateur ne répond pas à la première tentative d'appel sortant après un certain laps de temps, la fonction vocale étant activée.

9. Un service de téléphonie (1) de l'une quelconque des revendications 1 à 6, dans lequel la fonction de transfert relocalise une première tentative d'appel sortant vers le dispositif utilisateur (3, 4) en tant que deuxième tentative d'appel sortant par la même ligne et vers le même numéro et dispositif utilisateur de l'utilisateur que celui utilisé pour la première tentative d'appel sortant si l'utilisateur ne répond pas à la première tentative d'appel sortant après un certain laps de temps, la fonction vocale étant activée.

10. Un service de téléphonie (1) de la revendication 7 ou 8, dans lequel la première tentative d'appel sortant est établie par le service en utilisant le protocole standard d'initiation de session, SIP, et la deuxième tentative d'appel sortant est établie par le service en utilisant le champ d'en-tête d'information d'appel SIP pour fournir des informations supplémentaires, ces informations supplémentaires activant le haut-parleur pour démarrer automatiquement une fonction vocale bidirectionnelle si l'utilisateur n'a pas répondu après un temps défini.

11. Un service de téléphonie (1) de la revendication 6, dans lequel la **fonction de notification** est activée sous la forme d'un appel automatique initié par le service de téléphonie (1) lorsque l'utilisateur du dispositif utilisateur (3, 4) n'a pas répondu à un appel d'au moins l'une des parties prédéfinies (7, 8, 9) pendant un certain temps.

12. Un service de téléphonie (1) de la revendication 1, comprenant en outre une **fonction de blocage,** qui bloque les appels vers et depuis des numéros en dehors d'une liste prédéfinie de numéros, la fonction de blocage pouvant être contournée avec un code PIN.

13. Un service de téléphonie (1) de la revendication 1, **caractérisé en ce qu'**il peut être administré par l'une ou plusieurs des parties prédéfinies, via un appel de fonction, une fonction de répondeur interactif (IVR), ou via une application (APP) dans le dispositif de l'une ou plusieurs des parties prédéfinies.
